# EUROPEAN PATENT APPLICATION

(11) **EP 4 528 880 A1**
(43) Date of publication of application: **26.03.2025**
(21) Application number: 23834767.8
(22) Date of filing: 30.06.2023
(51) Int. Cl.: H01M 10/058, H01M 10/0564, H01M 10/0567

(54) **SECONDARY BATTERY AND APPARATUS**

(30) Priority: 04.07.2022 CN 202210792939
(71) Applicant: Nio Battery Technology (Anhui) Co., Ltd., Hefei, Anhui 230601 (CN)
(72) Inventor: YANG, Yong, Hefei, Anhui 230601 (CN)
(74) Representative: Torggler & Hofmann Patentanwälte - Innsbruck
(86) International application number: PCT/CN2023/104932
(87) International publication number: WO 2024/008000

(57) **Abstract**

A secondary battery and an apparatus. The secondary battery includes a positive electrode, a negative electrode, and an electrolyte, wherein the positive electrode includes a positive electrode active material, and the positive electrode active material includes at least one of LiNiₓCo_{y}M_{(1-x-y)}O₂ materials, where M is selected from at least one of Mn, Al, Mg, Cr, Ca, Zr, Mo, Ag and Nb, 0.8 ≤ x ≤ 1, 0 ≤ y ≤ 0.2, and x + y ≤ 1; the negative electrode includes a negative electrode active material, and the negative electrode active material includes a silicon-based material and a carbon-based material; and the electrolyte includes a non-aqueous organic solvent, a lithium salt, and an additive, and the non-aqueous organic solvent includes at least one of a chain carbonate and a fluorinated cyclic carbonate. By using a high-nickel positive electrode active material, a silicon-based negative electrode active material, and an electrolyte having high thermal stability in combination, the secondary battery has high energy density, excellent safety performance, and excellent cycle performance.

## Description

### Technical Field

The disclosure relates to the field of energy storage. In particular, the disclosure relates to a secondary battery and an apparatus.

### Background Art

With the increasingly prominent energy and environment issues and the continuous development of new technologies, the application of secondary batteries to portable electronic devices and electric automobiles with high endurance mileage and power performance is increasing daily, and the development of batteries with high energy density has become the focus of secondary battery development.

Currently, high-nickel ternary cathode materials have become one of the key research focuses for traction batteries due to their high energy density. However, in the current state of the art, there is a compromise between energy density and safety of the traction batteries using high-nickel ternary cathodes. On the one hand, unlike the temperature evaluated by individual materials, the commercially available conventional high-nickel ternary batteries of a high-energy system all have a thermal runaway temperature between 140°C and 160°C in a thermal chamber, which cannot realize the real thermal safety and stability of the batteries. On the other hand, current commercial electrolytes widely utilize the combination of a carbonate solvent and an electrolyte salt, such as lithium hexafluorophosphate. Due to a higher dielectric constant, cyclic ester solvents, such as ethylene carbonate (EC) and propylene carbonate (PC), enable the dissociation of more lithium salts to improve the conductivity and can form a stable organic SEI film as a passivating layer at the formation stage, thus being widely used as solvents of electrolyte, accounting for about 20 wt% - 30 wt% of solvents in practical use. However, in recent years, relevant studies have shown that an electrolyte containing a cyclic ester such as EC is not friendly to a ternary cathode battery, and makes great contribution to the exothermic reaction of thermal runaway in an accelerating rate calorimeter (ARC) test.

### Summary

In view of the deficiencies of prior art, the disclosure provides a secondary battery and a related apparatus. By combined use of a high-nickel cathode active material, a silicon-based anode active material, and an electrolyte with high thermal stability, the secondary battery of the disclosure has not only a high energy density, but also excellent safety and cycle performance.

A first aspect of the disclosure provides a secondary battery, including a cathode, an anode, and an electrolyte, wherein the cathode includes a cathode active material, and the cathode active material includes at least one of LiNiₓCo_{y}M_{(1-x-y)}O₂ materials, where M is selected from at least one of Mn, Al, Mg, Cr, Ca, Zr, Mo, Ag, and Nb, 0.8 ≤ x ≤1, 0 ≤ y ≤ 0.2, and x + y ≤ 1; the anode includes an anode active material, and the anode active material includes a silicon-based material and a carbon-based material; and the electrolyte includes a non-aqueous organic solvent, a lithium salt and an additive, and the non-aqueous organic solvent includes at least one of a chain carbonate and a fluorinated cyclic carbonate.

A second aspect of the disclosure provides an apparatus, including the secondary battery described in the first aspect.

The beneficial effects of the disclosure are as follows:
In the disclosure, the thermal safety and stability of a high-nickel ternary cathode and a silicon-doped anode system are improved by adjusting the composition of the electrolyte. On the one hand, a chain carbonate and/or a fluorinated cyclic carbonate are used in the electrolyte to replace conventional ethylene carbonate and propylene carbonate solvents, so that the thermal runaway of the battery system with a high-nickel ternary cathode and a silicon-doped anode can be greatly mitigated, and additionally the degree of dissociation of lithium salts can be increased, thus improving the conductivity. On the other hand, the high-nickel ternary cathode, particularly the NCM-8 series or NCM series with higher Ni content, can effectively increase the energy density of a secondary battery, thereby enabling the secondary battery of the disclosure to have a high energy density and excellent cycle performance and safety performance.

### Detailed Description of Embodiments

For the sake of brevity, only certain numerical ranges are specifically disclosed herein. However, any lower limit may be combined with any upper limit to form an unspecified range; moreover, any lower limit may be combined with any other lower limit to form an unspecified range, and likewise any upper limit may be combined with any other upper limit to form an unspecified range. In addition, each individually disclosed point or individual numerical value itself may serve as a lower or upper limit and be combined with any other point or individual numerical value, or with other lower or upper limit to form an unspecified range.

In the description herein, unless otherwise stated, "or more" and "or less" include the given number.

Unless otherwise stated, the terms used in the disclosure have the meanings commonly understood by those skilled in the art. Unless otherwise stated, the numerical values of the parameters mentioned in the disclosure can be measured by various measuring methods commonly used in the art (e.g., according to the methods given in the examples of the disclosure).

The list of items connected by the term "at least one of" or other similar terms may mean any combination of the listed items. For example, if items A and B are listed, the phrase "at least one of A and B" means only A; only B; or A and B. In another example, if items A, B and C are listed, the phrase "at least one of A, B and C" means only A; or only B; only C; A and B (excluding C); A and C (excluding B); B and C (excluding A); or all of A, B and C. Item A may include a single component or a plurality of components. Item B may include a single component or a plurality of components. Item C may include a single component or a plurality of components.

The term "silicon-based material" is not particularly limited, so long as the material contains silicon. In the disclosure, the "silicon-based material" may be silicon, a silicon alloy, a silicon oxide, a silicon-carbon composite, and any mixture of the silicon-based materials mentioned above.

The term "carbon-based material" is not particularly limited, which may be graphite, soft carbon, hard carbon, carbon nanotubes, graphene, and any mixture of the carbon-based materials mentioned above. Here, the term "graphite" is not particularly limited, which may be artificial graphite and/or natural graphite.

The disclosure is further described below in combination with specific embodiments. It should be appreciated that these specific embodiments are merely used to illustrate the disclosure rather than limiting the scope thereof.

### I. Secondary battery

The secondary battery provided by the disclosure includes a cathode, an anode and an electrolyte, wherein the cathode includes a cathode active material, and the cathode active material includes at least one of LiNiₓCo_{y}M_{(1-x-y)}O₂ materials, where M is selected from at least one of Mn, Al, Mg, Cr, Ca, Zr, Mo, Ag, and Nb, 0.8 ≤ x ≤1, 0 ≤ y ≤ 0.2, and x + y ≤ 1; the anode includes an anode active material, and the anode active material includes a silicon-based material and a carbon-based material; and the electrolyte includes a non-aqueous organic solvent, a lithium salt, and an additive, and the non-aqueous organic solvent includes at least one of a chain carbonate and a fluorinated cyclic carbonate.

The inventor of the disclosure has found through research that the thermal runaway of conventional secondary batteries is mainly caused by internal short circuits of batteries. However, a high-nickel ternary (NCM-8/9 series) battery is also prone to thermal runaway without internal short circuits. This is because the high-nickel ternary (NCM-8/9 series) battery undergoes severe oxygen evolution of the cathode at a high temperature (≥130°C), which easily oxidizes electrolyte, and the released heat accelerates the thermally activated chain reaction, leading to cell failure; additionally, the increased nickel content leads to poor consistency of thermal runaway of a battery at a high temperature, and the thermal runaway trigger temperature of a high-nickel battery is low, more easily undergoing thermal runaway. In addition, secondary batteries including various ternary cathode materials with different nickel contents are compared. In a thermal stability test, compared to conventional secondary batteries using NCM622 or NCM532 as a cathode material, the secondary batteries containing NCM811 or NCM900 have more significantly increased exothermic peaks, which further indicates that the secondary batteries containing a high-nickel ternary material have poor thermal stability, and the high-nickel cathode largely affects the safety of a full battery. In view of the problems described above, in the disclosure, by replacing conventional ethylene carbonate and propylene carbonate with a chain carbonate and/or a fluorinated cyclic carbonate as a solvent of electrolyte, the thermal runaway of a battery system with a high-nickel ternary cathode and a silicon-doped anode can be greatly mitigated; additionally, the fluorocarbonate can also increase the degree of dissociation of lithium salts to improve the conductivity, thereby enabling the battery system of the disclosure to have a high energy density and excellent cycle performance and safety performance.

According to some embodiments of the disclosure, the electrolyte includes no ethylene carbonate and/or propylene carbonate. In some embodiments, the electrolyte includes no unsubstituted saturated cyclic carbonate. Here, the expression "include(s) no" refers to a content by mass of the component in the electrolyte that is lower than 1 wt%, for example, lower than 0.5 wt%, and even lower than 0.1 wt%. Due to a higher dielectric constant, cyclic ester solvents, such as ethylene carbonate (EC) and propylene carbonate (PC), enable the dissociation of more lithium salts to improve the conductivity and can form a stable organic SEI film as a passivating layer at the formation stage, thus being widely used as solvents of electrolyte, accounting for about 20 wt% - 30 wt% of solvents in practical use. However, in a secondary battery using a ternary material as a cathode, the saturated cyclic carbonate solvents such as EC easily undergo an exothermic reaction with the cathode material, causing the thermal runaway of the secondary battery.

According to some embodiments of the disclosure, the content by mass of the chain carbonate is 0 to 90%, based on the mass of the electrolyte. In some embodiments, the content by mass of the chain carbonate is 5%, 10%, 20%, 25%, 35%, 40%, 45%, 50%, 55%, 60%, 65%, 70%, 75%, 80%, 85%, or any value therebetween. In some embodiments, the content by mass of the chain carbonate is 30% to 80%.

According to some embodiments of the disclosure, the content by mass of the fluorinated cyclic carbonate is 0 to 30%, based on the mass of the electrolyte. In some embodiments, the content by mass of the fluorinated cyclic carbonate is 2%, 5%, 8%, 10%, 13%, 15%, 17%, 20%, 23%, 25%, 27%, or any value therebetween. In some embodiments, the content by mass of the fluorinated cyclic carbonate is 10% to 30%.

According to some embodiments of the disclosure, the total content by mass of the chain carbonate and the fluorinated cyclic carbonate is 80% or more, for example, 85% or more, 88% or more, 90% or more, 92% or more, 95% or more, and 98% or more, based on the mass of the electrolyte. According to some embodiments of the disclosure, thesum of the contents by mass of the chain carbonate and the fluorinated cyclic carbonate is 90% or more, based on the mass of the electrolyte. According to some embodiments of the disclosure, thesum of the contents by mass of the chain carbonate and the fluorinated cyclic carbonate is 95% or more, based on the mass of the electrolyte.

In a system where the addition amount of a silicon-based material is < 10%, the content of the fluorinated cyclic carbonate is typically greater than or equal to 3% and less than 10%, and for a high-silicon system where the addition amount of the silicon-based material is 10%-50%, such as 15%-50% and 15-35%, the addition amount of a fluorocarbonate is typically ≥ 10%, preferably 10% to 30%. **In** the disclosure, the chain carbonate mainly serves as a lithium-ion conduction medium, and the fluorinated cyclic carbonate mainly plays the role of dissociating a lithium salt. When the content of the fluorinated cyclic carbonate is too low, the lithium salt cannot be effectively dissociated. Excessive fluorinated cyclic carbonate (> 30%) causes significant gas production during the cell cycle, leading to cell expansion and too-fast cycle decay, as well as increased impedance, degrading the cycle of the cell.

According to some embodiments of the disclosure, the chain carbonate includes at least one of compounds represented by formula I, 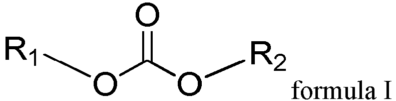 where in formula I, R₁ and R₂, equal or different, are each independently selected from C₁-C₆ alkyl or fluorinated C₁-C₆ alkyl. In some embodiments, R₁ and R₂ equal or different, are each independently selected from C₁-C₄ alkyl or fluorinated C₁-C₄ alkyl.

In the disclosure, the C₁-C₆ alkyl is selected from methyl, ethyl, n-propyl, isopropyl, n-butyl, isobutyl, tert-butyl, n-pentyl, isopentyl and n-hexyl. The fluorinated C₁-C₆ alkyl is selected from fluoromethyl, fluoroethyl, fluorinated n-propyl, fluorinated isopropyl, fluorinated n-butyl, fluorinated isobutyl, fluorinated tert-butyl, fluorinated n-pentyl, fluorinated isopentyl, and fluorinated n-hexyl, where the "fluoro/fluorinated" means at least one hydrogen atom in the C₁-C₆ alkyl is substituted with a fluorine atom. In some embodiments, the fluorinated C₁-C₆ alkyl is selected from monofluoromethyl, difluoromethyl, trifluoromethyl, difluoroethyl, trifluoroethyl, pentafluoroethyl, and hexafluoroisopropyl.

In some embodiments, the chain carbonate includes at least one of dimethyl carbonate, ethyl methyl carbonate, diethyl carbonate, methyl n-propyl carbonate, ethyl n-propyl carbonate, di-n-propyl carbonate, bis(fluoromethyl) carbonate, bis(difluoromethyl) carbonate, bis(trifluoromethyl) carbonate, bis(2-fluoroethyl) carbonate, and bis(2,2-difluoroethyl) carbonate.

According to some embodiments of the disclosure, the fluorinated cyclic carbonate includes at least one of compounds represented by formula II, 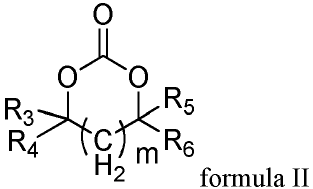 where in formula II, R₃, R₄, R₅ and R₆ are each independently selected from a hydrogen atom, a fluorine atom, and C₁-C₆ alkyl, and at least one of R₃, R₄, R₅ and R₆ is a fluorine atom, and m is 0, 1, 2, 3 or 4.

In some embodiments, the fluorinated cyclic carbonate includes at least one of fluoroethylene carbonate, fluoropropylene carbonate, difluoroethylene carbonate, difluoropropylene carbonate, trifluoropropylene carbonate, trifluoromethyl propylene carbonate, and fluorobutylene carbonate.

According to some embodiments of the disclosure, the lithium salt includes a first lithium salt and a second lithium salt. In some embodiments, the concentration of the lithium salt in the electrolyte is 0.5 M (mol/L) - 2.5 M (mol/L), such as 0.6 M, 0.7 M, 0.75 M, 0.85 M, 0.9 M, 0.95 M, 1.05 M, 1.1 M, 1.15 M, 1.25 M, 1.3 M, 1.4 M, 1.45 M, 1.55 M, 1.6 M, 1.7 M, 1.75 M, 1.85 M, 1.9 M, 2.0 M, 2.1 M, 2.2 M, 2.3 M, 2.4 M, or any value therebetween. In some embodiments, the concentration of the lithium salt is 0.7 M - 1.8 M.

According to some embodiments of the disclosure, the first lithium salt includes one or more sulfonyl-free lithium salts, for example, at least one of lithium fluorophosphates, lithium fluoroborates, lithium perchlorate, lithium fluoroarsenates, lithium fluoroantimonates, and lithium fluorosulfonate. In some embodiments, the first lithium salt is selected from lithium hexafluorophosphate (LiPF₆), lithium tetrafluoroborate (LiBF₄), lithium perchlorate (LiClO₄), lithium hexafluoroarsenate (LiAsF₆), lithium hexafluoroantimonate (LiSbF₆), or lithium fluorosulfonate (LiSO₃F). In some embodiment, the concentration of the first lithium salt in the electrolyte is 0 M - 1 M, such as 0.1 M, 0.15 M, 0.25 M, 0.3 M, 0.4 M, 0.45 M, 0.55 M, 0.6 M, 0.7 M, 0.8 M, 0.9 M, or any value therebetween. In some embodiments, the concentration of the first lithium salt is 0.1 M - 0.5 M.

According to some embodiments of the disclosure, the second lithium salt includes one or more sulfonyl-containing lithium salts. In some embodiments, the second lithium salt includes at least one of compounds represented by formula III-1 or formula III-2, 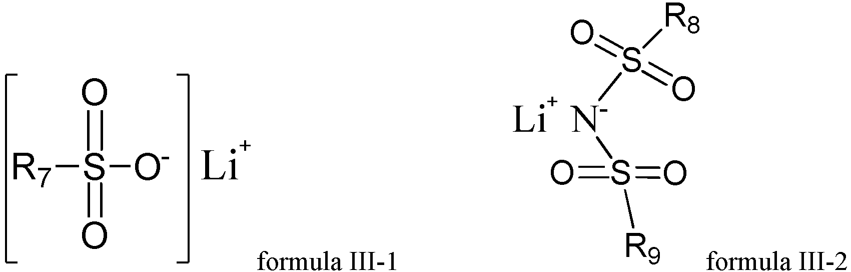 where in formula III-1, R₇ is selected from fluorinated C₁-C₆ alkyl; and in formula III-2, R₈ and R₉, equal or different, are each independently selected from fluorine, C₁-C₆ alkyl, or fluorinated C₁-C₆ alkyl, and at least one of R₈ and R₉ contains fluorine element.

According to some embodiments of the disclosure, the second lithium salt is selected from at least one of lithium trifluorosulfonyl, lithium bis(fluorosulfonyl)imide, lithium (trifluoromethanesulfonyl)(perfluorobutanesulfonyl)imide, lithium bis(trifluoromethanesulfonyl)imide, and lithium bis(pentafluoroethanesulfonyl)imide. In some embodiments, the concentration of the second lithium salt in the electrolyte is 0.2 M - 1.2 M, such as 0.25 M, 0.3 M, 0.4 M, 0.45 M, 0.55 M, 0.6 M, 0.5 M, 0.75 M, 0.8 M, 0.9 M, 0.95 M, 1.05 M, 1.1 M, or any value therebetween. In some embodiments, the concentration of the second lithium salt is 0.7 M - 1.0 M.

According to some embodiments of the disclosure, the ratio of the molar concentration of the first lithium salt to the second lithium salt is 1:1 to 1:10, such as 1:2, 1:3, 1:4, 1:5, 1:6, 1:7, 1:8, 1:9, or any value therebetween. In some embodiments, the ratio of the molar concentration of the first lithium salt to the second lithium salt is 1:1 to 1:8, in particular 1:2 to 1:6. In the disclosure, a combination of a sulfonyl-free first lithium salt and a sulfonyl-containing second lithium salt is used, and with more first lithium salt being replaced with the second lithium salt with high thermal stability, the thermal stability of the electrolyte can be further improved.

According to some embodiments of the disclosure, the non-aqueous solvent further includes at least one of a carboxylate, a chain ether, a phosphorus-containing organic solvent, a sulfur-containing organic solvent, and an aromatic fluorine-containing solvent.

In some embodiments, the carboxylate includes at least one of compounds represented by formula IV, 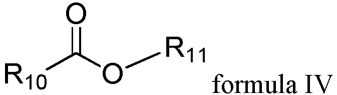 where in formula IV, R₁₀ and R₁₁, equal or different, are each selected from C₁-C₆ alkyl or fluorinated C₁-C₆ alkyl.

In some embodiments, the carboxylate is selected from at least one of methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl trifluoroacetate, ethyl trifluoroacetate, propyl trifluoroacetate, and butyl trifluoroacetate.

In some embodiments, the chain ether includes at least one of compounds represented by formula V- 1 or formula V-2, 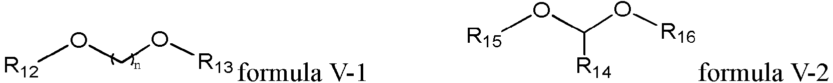 where in formula V-1 and formula V-2, R₁₂, R₁₃, R₁₄, R₁₅ and R₁₆ are each independently selected from C₁-C₆ alkyl or fluorinated C₁-C₆ alkyl, and n is 1, 2 or 3.

In some embodiments, the chain ether is selected from at least one of dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, 1,2-ethoxymethoxyethane, bis(trifluoroethoxy)ethane, ethoxytrifluoroethoxyethane, and methoxytrifluoroethoxyethane.

In some embodiments, the phosphorus-containing organic solvent includes at least one of a phosphate, a phosphite, and an alkylphosphine oxide. In some embodiments, the phosphate includes at least one of compounds represented by formula VI, 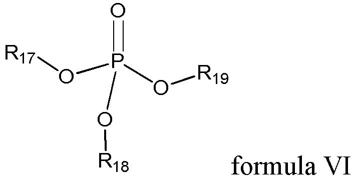 where in formula VI, R₁₇, R₁₈ and R₁₉ are each independently selected from C₁-C₆ alkyl, fluorinated C₁-C₆ alkyl, or C₆-C₁₂ aryl.

In the disclosure, the C₆-C₁₂ aryl is selected from phenyl, methylphenyl, ethylphenyl, isopropylphenyl, n-butylphenyl, isobutylphenyl, tert-butylphenyl, n-pentylphenyl, isopentylphenyl, or n-hexylphenyl.

In some embodiments, the phosphite includes at least one of compounds represented by formula VII, 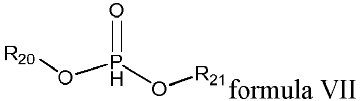 where in formula VII, R₂₀ and R₂₁, equal or different, are each independently selected from C₁-C₆ alkyl, fluorinated C₁-C₆ alkyl, or C₆-C₁₂ aryl.

In some embodiments, the phosphite includes at least one of compounds represented by formula VIII, 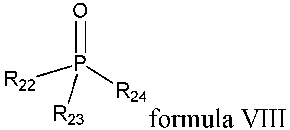 where in formula VIII, R₂₂, R₂₃ and R₂₄ are each independently selected from C₁-C₆ alkyl, fluorinated C₁-C₆ alkyl, or C₆-C₁₂ aryl.

In some embodiments, the phosphorus-containing organic solvent is selected from at least one of trimethyl phosphate, triethyl phosphate, dimethylethyl phosphate, methyl diethyl phosphate, ethylene methyl phosphate, ethylene ethyl phosphate, triphenyl phosphate, trimethyl phosphite, triethyl phosphite, triphenyl phosphite, trimethylphosphine oxide, triethoxyphosphine oxide, triphenylphosphine oxide, tris(2,2,2-trifluoroethyl) phosphate, tris(2,2,2-trifluoroethyl) phosphate, and tris(2,2,3,3,3-pentafluoropropyl) phosphate.

In some embodiments, the sulfur-containing organic solvent includes at least one of a sulfone compound, a sulfonate compound, and a sulfate compound. In some embodiments, the sulfur-containing organic solvent is selected from at least one of sulfolane, 2-methylsulfolane, 3-methylsulfolane, dimethylsulfone, diethylsulfone, ethyl methyl sulfone, methyl propyl sulfone, dimethyl sulfoxide, methyl methane sulfonate, ethyl methane sulfonate, methyl ethanesulfonate, ethyl ethanesulfonate, dimethyl sulfate, diethyl sulfate, and dibutyl sulfate.

In some embodiments, the aromatic fluorine-containing solvent includes at least one of fluorobenzenes. In some embodiments, the aromatic fluorine-containing solvent is selected from at least one of fluorobenzene, difluorobenzene, trifluorobenzene, tetrafluorobenzene, pentafluorobenzene, hexafluorobenzene, and trifluoromethylbenzene.

According to some embodiments of the disclosure, the additive includes at least one of a carbon-carbon double bond-containing cyclic carbonate, a cyclic sulfate compound, a sultone compound, a cyclic anhydride, a boron-containing lithium salt, and a lithium phosphate salt. The additive in the electrolyte can be decomposed to form SEI and CEI at the interfaces of the positive and anodes, so that the electrolyte is prevented from directly contacting with the cathode having a strong oxidizing property and the anode having a strong reducing property, thus avoiding the exothermic reaction of the electrolyte with the positive and anodes. Therefore, enhancing the thermal stability of SEI and CEI is conducive to improving the thermal stability of the electrolyte. In the disclosure, the temperature of the thermal decomposition of SEI is significantly increased by adding a sulfur-based additive (e.g., a cyclic sulfate compound, a sultone compound, etc.) to the electrolyte; additionally, the addition of an unsaturated bond-containing additive (e.g., a carbon-carbon double bond-containing cyclic carbonate, etc.) not only helps to increase the decomposition temperature of SEI, but also can reduce the heat from the reaction, thus further improving the thermal stability of the electrolyte.

In some embodiments, the content by mass of the additive is 0 to 8%, based on the mass of the electrolyte. In some embodiments, the content by mass of the additive is 0.1%, 0.5%, 0.7%, 1.0%, 1.3%, 1.5%, 1.7%, 2.0%, 2.3%, 2.5%, 2.7%, 3.0%, 3.3%, 3.5%, 3.7%, 4.0%, 4.3%, 4.5%, 4.7%, 5.0%, 5.3%, 5.7%, 6.0%, 6.3%, 6.5%, 6.7%, 7.0%, 7.3%, 7.7%, or any value therebetween.

In some embodiments, the carbon-carbon double bond-containing cyclic carbonate includes at least one of compounds of formula IX-1 or IX-2: 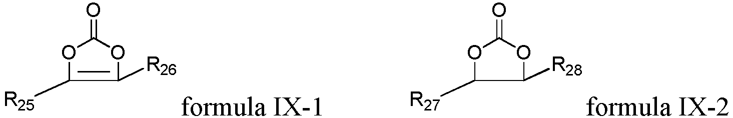 where in formula IX-1, R₂₅ and R₂₆ each independently represent a hydrogen atom or C₁-C₆ alkyl; and in formula IX-2, R₂₇ and R₂₈ each independently represent a hydrogen atom, C₁-C₆ alkyl, or C₂-C₆ alkenyl, and at least one of R₂₇ and R₂₈ is selected from C₂-C₆ alkenyl.

In the disclosure, the C₂-C₆ alkenyl is selected from vinyl, propenyl, allyl, n-butenyl, or isobutenyl.

In some embodiments, the carbon-carbon double bond-containing cyclic carbonate includes vinylene carbonate (VC), vinylethylene carbonate or vinyl ethylene carbonate. In some embodiments, the content by mass of the carbon-carbon double bond-containing cyclic carbonate, for example, vinylene carbonate, is 0-2%, such as 0.1%, 0.5%, 0.7%, 0.9%, 1.0%, 1.3%, 1.5%, or 1.7%, based on the mass of the electrolyte. In some embodiments, the content by mass of the carbon-carbon double bond-containing cyclic carbonate is 0.2% - 1%.

In some embodiments, the cyclic sulfate compound includes at least one of compounds represented by formula X, 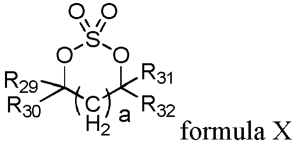 where in formula X, R₂₉, R₃₀, R₃₁ and R₃₂ each independently represent a hydrogen atom, a fluorine atom or C₁-C₆ alkyl, and a is 0, 1, 2, 3 or 4.

In some embodiments, the cyclic sulfate compound is selected from at least one of ethylene sulfate, 4-methyl ethylene sulfate, and 4-fluoroethylene sulfate. In some embodiments, the content by mass of the cyclic sulfate compound, for example, ethylene sulfate, is 0-2%, such as 0.1%, 0.3%, 0.7%, 0.9%, 1.0%, 1.3%, 1.6%, 1.8%, or any value therebetween, based on the mass of the electrolyte. In some embodiments, the content by mass of the cyclic sulfate compound is 0.5% - 1.5%.

In some embodiments, the sultone compound includes at least one of methylene methanedisulfonate and compounds represented by formula XI-1 or formula XI-2, 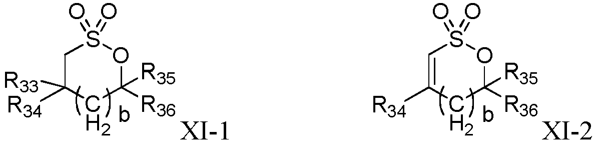 where in formula XI-1 and formula XI-2, R₃₃, R₃₄, R₃₅ and R₃₆ each independently represent a hydrogen atom, a fluorine atom, or C₁-C₆ alkyl, and b is 0, 1, 2, 3, or 4.

In some embodiments, the sultone compound includes at least one of methylene methanedisulfonate, 1,3-propanesultone, 1,4-butanesultone, 1,3-propylenesultone, and 1,4-butenesultone.

In some embodiments, the content by mass of the sultone compound is 0-3%, such as 0.1%, 0.3%, 0.7%, 0.9%, 1.0%, 1.3%, 1.6%, 1.8%, 2.0%, 2.3%, 2.5%, 2.7%, or any value therebetween, based on the mass of the electrolyte.

In some embodiments, the content by mass of the 1,3-propanesultone is 0-3%, preferably 0.5-2%, based on the mass of the electrolyte. In some embodiments, the content by mass of the 1,4-butanesultone is 0-2%, preferably 0.5-1.5%, based on the mass of the electrolyte. In some embodiments, the content by mass of the 1,3-propylenesultone is 0-1.0%, preferably 0.2-0.5%, based on the mass of the electrolyte. In some embodiments, the content by mass of the 1,4-butenesultone is 0-1.0%, preferably 0.2-0.5%, based on the mass of the electrolyte. In some embodiments, the content by mass of the methylene methanedisulfonate is 0-1.0%, preferably 0.2-0.5%, based on the mass of the electrolyte.

In some embodiments, the cyclic anhydride includes at least one of succinic anhydride and citraconic anhydride. In some embodiments, the boron-containing lithium salt includes at least one of lithium 2-methylmalebis(oxalato)borate and lithium difluoro(oxalato)borate.

In some embodiments, the lithium phosphate salt includes at least one of lithium difluoro(oxalato)phosphate and lithium difluorophosphate. In some embodiments, the content by mass of the lithium difluorophosphate is 0-1%, such as 0.1%, 0.2%, 0.3%, 0.4%, 0.5%, 0.6%, 0.7%, 0.8%, 0.9%, or any value therebetween, based on the mass of the electrolyte.

According to some embodiments of the disclosure, in the LiNiₓCo_{y}M_{(1-x-y)}O₂ material, 0.86 ≤ x ≤ 1, 0 ≤ y ≤ 0.14, and x + y ≤ 1. In some embodiments, 0.86 ≤ x ≤ 1, particularly 0.9 ≤ x ≤ 1, for example, x is 0.91, 0.92, 0.93, 0.94, 0.95, 0.96, 0.97 or 0.98. In some embodiments, 0 ≤ y ≤ 0.14, particularly 0 ≤ y ≤ 0.1, for example, y is 0.01, 0.02, 0.03, 0.04, 0.05, 0.06, 0.07, 0.08, or 0.09. In some embodiments, the cathode active material includes at least one of NCM811, Ni90, and Ni94.

According to some embodiments of the disclosure, in the anode active material, the content z% by mass of the silicon-based material satisfies 10 ≤ z < 100, and the content k% by mass of the carbon-based material satisfies 0 < k ≤ 90. In some embodiments, z is 11, 13, 15, 20, 25, 30, 35, 40, 45, 50, 55, 60, 65, 70, 75, 80, 85, 90, 95, or any value therebetween. In some embodiments, k is 5, 10, 15, 20, 25, 30, 35, 40, 45, 50, 55, 60, 65, 70, 75, 80, 85, 87, 89, or any value therebetween. According to some embodiments of the disclosure, the anode active material includes a silicon-based material selected from a silicon oxide and a silicon-carbon composite, and a carbon-based material selected from graphite. In these embodiments, the content z% by mass of the silicon-based material satisfies 10 ≤ z ≤ 50, for example, 15 ≤ z ≤ 50, particularly 15 ≤ z ≤ 35, and the content k% by mass of the carbon-based material satisfies 50 ≤ z ≤ 90, for example, 50 ≤ k ≤ 85, particularly 65 ≤ k ≤ 85.

According to some embodiments of the disclosure, the cathode includes a cathode current collector and a cathode active material layer on the cathode current collector, and the cathode active material layer includes the cathode active material described above.

In some embodiments, the cathode active material layer further includes a binder, and optionally includes a conductive material. The adhesive improves the bonding between the cathode active material particles, and also improves the bonding of the cathode active material with the current collector.

In some embodiments, the binder includes, but is not limited to polyvinyl alcohol, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, poly(1,1-difluoroethylene), polyethylene, polypropylene, styrene-butadiene rubber, acrylic acid (ester)-modified styrene-butadiene rubber, epoxy resin, nylon, etc.

In some embodiments, the conductive material includes, but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum or silver. In some embodiments, the conductive polymer is a polyphenylene derivative.

In some embodiments, the cathode current collector may be a metal foil or a composite current collector. For example, aluminum foil may be used. The composite current collector may be formed by forming a metal material (copper, a copper alloy, nickel, a nickel alloy, titanium, a titanium alloy, silver and a silver alloy) on a polymer substrate.

The cathode may be prepared by methods well known in the art. For example, the cathode may be obtained by mixing an active material, a conductive material and a binder in a solvent to prepare an active material composition, and applying the active material composition onto a current collector. In some embodiments, the solvent may include, but is not limited to, N-methylpyrrolidone.

According to some embodiments of the disclosure, the anode includes an anode current collector, and an anode active material layer provided on the anode current collector, and the anode active material layer includes the anode active material described above.

In some embodiments, the anode current collector includes copper foil, nickel foil, stainless steel foil, titanium foil, nickel foam, copper foam, a polymer substrate covered with a conductive metal, or any combination thereof.

In some embodiments, the anode active material layer further includes a binder and a conductive agent. In some embodiments, the binder includes, but is not limited to polyvinyl alcohol, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, poly(1,1-difluoroethylene), polyethylene, polypropylene, styrene-butadiene rubber, an acrylated styrene-butadiene rubber, epoxy resin, nylon, etc.

In some embodiments, the conductive agent includes, but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum or silver. In some embodiments, the conductive polymer is a polyphenylene derivative.

The anode of the disclosure may be prepared by methods well known in the art. Typically, an anode active material and optionally a conductive agent (e.g., a carbon material such as carbon black, and metal particles), a binder (e.g., SBR), other optional additives (e.g., a PTC thermally sensitive resistance material), etc., are mixed, dispersed in a solvent (e.g., deionized water), stirred until uniform, then uniformly applied onto an anode current collector, and dried to obtain an anode containing an anode film. Materials such as metal foil or a porous metal plate may be used as an anode current collector.

According to some embodiments of the disclosure, a separator is provided between the cathode and the anode to prevent short circuits. The material and shape of the separator used in the embodiments of the disclosure are not particularly limited and may be any technique disclosed in the prior art. In some embodiments, the separator includes a polymer, an inorganic substance, and the like, which are formed from a material that is stable to the electrolyte of the disclosure.

For example, the separator may include a substrate layer and a surface treatment layer. The substrate layer is a nonwoven fabric, film or composite film with a porous structure, and the material of the substrate layer includes at least one of polyethylene, polypropylene, polyethylene terephthalate, and polyimide. In particular, a porous polypropylene film, a porous polyethylene film, a polypropylene nonwoven fabric, a polyethylene nonwoven fabric, or a porous polypropylene-polyethylene-polypropylene composite film may be used.

At least one surface of the substrate layer is provided with a surface treatment layer, which may be a polymer layer or an inorganic substance layer, or a layer formed by mixing a polymer and an inorganic substance.

The inorganic substance layer includes inorganic particles and a binder. The inorganic particles include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder includes at least one of polyvinylidene fluoride, a vinylidene fluoride-hexafluoropropylene copolymer, polyamide, polyacrylonitrile, a polyacrylate ester, polyacrylic acid, a polyacrylate salt, polyvinylpyrrolidone, polyethylene ether, polymethyl methacrylate, polytetrafluoroethylene, and polyhexafluoropropylene.

The polymer layer includes a polymer, and the material of the polymer includes at least one of polyamide, polyacrylonitrile, an acrylate polymer, polyacrylic acid, polyacrylate, polyvinylpyrollidone, polyvinyl ether, polyvinylidene fluoride, and poly(vinylidene fluoride-hexafluoropropylene).

According to some embodiments of the disclosure, the secondary battery is a lithium metal secondary battery or a sodium metal secondary battery. In some embodiments, the lithium metal secondary battery includes, but is not limited to a lithium metal secondary battery, a lithium-ion secondary battery, a lithium polymer secondary battery, or a lithium-ion polymer secondary battery.

According to some embodiments of the disclosure, the secondary battery may include an outer package, which may be a hard case, such as a hard plastic case, an aluminum case and a steel case. The outer package of the secondary battery may also be a soft package, such as a bag-type soft package. The material of the soft package may be plastics, for example, one or more of polypropylene (PP), polybutylene terephthalate (PBT), polybutylene succinate (PBS), and the like.

According to some embodiments of the disclosure, the shape of the secondary battery is not particularly limited; it may be cylindrical, square or any other shape.

In some embodiments, the disclosure further provides a battery module. The battery module includes the secondary battery described above. The battery module of the disclosure uses the secondary battery described above, thus at least having the same advantages as the secondary battery described above. The battery module of the disclosure may contain a plurality of secondary batteries, the specific number of which can be adjusted according to the application and capacity of the battery module.

In some embodiments, the disclosure further provides a battery pack including the battery module described above. The number of battery modules contained in the battery pack can be adjusted according to the application and capacity of the battery pack.

### II. Apparatus

The disclosure further provides an apparatus including at least one of the secondary battery, battery module, or battery pack described above.

In some embodiments, the apparatus includes, but is not limited to an electric vehicle, a hybrid electric vehicle, a plug-in hybrid electric vehicle, an electricity storage system, and the like. A battery pack or battery module can be used to meet the apparatus's high power and high energy density requirements for secondary batteries.

In other embodiments, the apparatus may be a mobile phone, a tablet, a laptop, and the like. The apparatus is usually required to be light and thin and can use the secondary battery as a power supply.

### Examples and comparative examples

### Example 1

Cathode: a ternary high-nickel cathode active material Ni90, conductive carbon black, and a binder of polyvinylidene chloride were mixed in a mass ratio of 97.5: 1.5 : 1.0, and dispersed in N-methyl-2-pyrrolidone to obtain a cathode slurry, and then the cathode slurry was uniformly applied onto both sides of an aluminum foil, followed by drying, calendering and vacuum drying to obtain a cathode plate, also referred to as a cathode.

Anode: an anode active material (30 wt% of silicon oxide + 70 wt% of graphite), conductive carbon black, a binder (styrene-butadiene rubber and polyacrylic acid), and sodium carboxymethyl cellulose were mixed in a mass ratio of 96.0 : 1.0 : 2.4 : 0.6, and dispersed in deionized water to obtain an anode slurry, and the anode slurry was applied onto both sides of a copper foil, followed by drying, calendering and vacuum drying to obtain an anode plate, also referred to as an anode.

Electrolyte: in a nitrogen-protected glove box (with a moisture content < 1 ppm and an oxygen content < 1 ppm), to 832 g of ethyl methyl carbonate (EMC), 128 g of lithium hexafluorophosphate (LiPF₆) was added, and then 5 g of vinylene carbonate (VC), 10 g of 1,3-propanesultone (PS), 5 g of lithium difluorophosphate (LiPO₂F₂), and 20 g of ethylene sulfate (DTD) were added and stirred until uniform to obtain the electrolyte of the lithium-ion battery of Example 1. Specifically, the contents by mass of the components, based on the total weight of the electrolyte, were shown in Table 1.

Lithium-ion battery: a porous PE polymer separator was placed between a cathode and an anode, and then the sandwich structure made up of the cathode, the separator and the anode was subjected to a stacking process and then placed in an aluminum plastic film packaging bag, followed by baking under vacuum at 75°C for 48 h to obtain a cell to be filled with an electrolyte. The electrolyte prepared above was injected into the cell, followed by vacuum sealing, aging, formation and capacity grading to obtain a lithium-ion battery.

### Example 2

Example 2 was different from Example 1 only in the composition of the electrolyte, which was prepared as follows:
In a nitrogen-protected glove box (with a moisture content < 1 ppm and an oxygen content < 1 ppm), to 832 g of ethyl methyl carbonate (EMC), 58 g of lithium hexafluorophosphate (LiPF₆) and 70 g of lithium bis(fluorosulfonyl)imide (LiFSi) were added, and then 5 g of vinylene carbonate (VC), 10 g of 1,3-propanesultone (PS), 5 g of lithium difluorophosphate (LiPO₂F₂), and 20 g of ethylene sulfate (DTD) were added and stirred until uniform to obtain the electrolyte of the lithium-ion battery of Example 2. The ratio of the molar concentration of LiPF₆ to LiFSi in the electrolyte was 1 : 1. Specifically, the contents by mass of the components, based on the total weight of the electrolyte, were shown in Table 1.

### Example 3

Example 3 was different from Example 1 only in the composition of the electrolyte, which was prepared as follows:
In a nitrogen-protected glove box (with a moisture content < 1 ppm and an oxygen content < 1 ppm), to 732 g of ethyl methyl carbonate (EMC), 100 g of fluoroethylene carbonate (FEC) was added, then 58 g of lithium hexafluorophosphate (LiPF₆) and 70 g of lithium bis(fluorosulfonyl)imide (LiFSi) were added, and then 5 g of vinylene carbonate (VC), 10 g of 1,3-propanesultone (PS), 5 g of lithium difluorophosphate (LiPO₂F₂), and 20 g of ethylene sulfate (DTD) were added and stirred until uniform to obtain the electrolyte of the lithium-ion battery in Example 3. The ratio of the molar concentration of LiPF₆ to LiFSi in the electrolyte was 1 : 1. Specifically, the contents by mass of the components, based on the total weight of the electrolyte, were shown in Table 1.

### Example 4

Example 4 was different from Example 1 only in the composition of the electrolyte, which was prepared as follows:
In a nitrogen-protected glove box (with a moisture content < 1 ppm and an oxygen content < 1 ppm), to 782 g of ethyl methyl carbonate (EMC), 50g of fluoroethylene carbonate (FEC) was added, then 58 g of lithium hexafluorophosphate (LiPF₆) and 70 g of lithium bis(fluorosulfonyl)imide (LiFSi) were added, and then 5 g of vinylene carbonate (VC), 10 g of 1,3-propanesultone (PS), 5 g of lithium difluorophosphate (LiPO₂F₂), and 20 g of ethylene sulfate (DTD) were added and stirred until uniform to obtain the electrolyte of the lithium-ion battery in Example 4. The ratio of the molar concentration of LiPF₆ to LiFSi in the electrolyte was 1 : 1. Specifically, the contents by mass of the components, based on the total weight of the electrolyte, were shown in Table 1.

### Example 5

Example 5 was different from Example 1 only in the composition of the electrolyte, which was prepared as follows:
In a nitrogen-protected glove box (with a moisture content < 1 ppm and an oxygen content < 1 ppm), to 632 g of ethyl methyl carbonate (EMC), 200 g of fluoroethylene carbonate (FEC) was added, then 58 g of lithium hexafluorophosphate (LiPF₆) and 70 g of lithium bis(fluorosulfonyl)imide (LiFSi) were added, and then 5 g of vinylene carbonate (VC), 10 g of 1,3-propanesultone (PS), 5 g of lithium difluorophosphate (LiPO₂F₂), and 20 g of ethylene sulfate (DTD) were added and stirred until uniform to obtain the electrolyte of the lithium-ion battery in Example 5. The ratio of the molar concentration of LiPF₆ to LiFSi in the electrolyte was 1 : 1. Specifically, the contents by mass of the components, based on the total weight of the electrolyte, were shown in Table 1.

### Example 6

Example 6 was different from Example 1 only in the composition of the electrolyte, which was prepared as follows:
In a nitrogen-protected glove box (with a moisture content < 1 ppm and an oxygen content < 1 ppm), to 532 g of ethyl methyl carbonate (EMC), 300 g of fluoroethylene carbonate (FEC) was added, then 58 g of lithium hexafluorophosphate (LiPF₆) and 70 g of lithium bis(fluorosulfonyl)imide (LiFSi) were added, and then 5 g of vinylene carbonate (VC), 10 g of 1,3-propanesultone (PS), 5 g of lithium difluorophosphate (LiPO₂F₂), and 20 g of ethylene sulfate (DTD) were added and stirred until uniform to obtain the electrolyte of the lithium-ion battery in Example 6. The ratio of the molar concentration of LiPF₆ to LiFSi in the electrolyte was 1 : 1. Specifically, the contents by mass of the components, based on the total weight of the electrolyte, were shown in Table 1.

### Example 7

Example 7 was different from Example 1 only in the composition of the electrolyte, which was prepared as follows:
In a nitrogen-protected glove box (with a moisture content < 1 ppm and an oxygen content < 1 ppm), to 416 g of ethyl methyl carbonate (EMC), 416 g of fluoroethylene carbonate (FEC) was added, then 58 g of lithium hexafluorophosphate (LiPF₆) and 70 g of lithium bis(fluorosulfonyl)imide (LiFSi) were added, and then 5 g of vinylene carbonate (VC), 10 g of 1,3-propanesultone (PS), 5 g of lithium difluorophosphate (LiPO₂F₂), and 20 g of ethylene sulfate (DTD) were added and stirred until uniform to obtain the electrolyte of the lithium-ion battery in Example 7. The ratio of the molar concentration of LiPF₆ to LiFSi in the electrolyte was 1 : 1. Specifically, the contents by mass of the components, based on the total weight of the electrolyte, were shown in Table 1.

### Example 8

Example 8 was different from Example 1 only in the composition of the electrolyte, which was prepared as follows:
In a nitrogen-protected glove box (with a moisture content < 1 ppm and an oxygen content < 1 ppm), to 732 g of ethyl methyl carbonate (EMC), 100 g of fluoroethylene carbonate (FEC) was added, then 128 g of lithium bis(fluorosulfonyl)imide (LiFSi) was added, and then 5 g of vinylene carbonate (VC), 10 g of 1,3-propanesultone (PS), 5 g of lithium difluorophosphate (LiPO₂F₂), and 20 g of ethylene sulfate (DTD) were added and stirred until uniform to obtain the electrolyte of the lithium-ion battery in Example 8. Specifically, the contents by mass of the components, based on the total weight of the electrolyte, were shown in Table 1.

### Example 9

Example 9 was different from Example 1 only in the composition of the electrolyte, which was prepared as follows:
In a nitrogen-protected glove box (with a moisture content < 1 ppm and an oxygen content < 1 ppm), to 732 g of ethyl methyl carbonate (EMC), 100 g of fluoroethylene carbonate (FEC) was added, then 128 g of lithium hexafluorophosphate (LiPF₆) was added, and then 5 g of vinylene carbonate (VC), 10 g of 1,3-propanesultone (PS), 5 g of lithium difluorophosphate (LiPO₂F₂), and 20 g of ethylene sulfate (DTD) were added and stirred until uniform to obtain the electrolyte of the lithium-ion battery in Example 9. Specifically, the contents by mass of the components, based on the total weight of the electrolyte, were shown in Table 1.

### Example 10

Example 10 was different from Example 1 only in the composition of the electrolyte, which was prepared as follows:
In a nitrogen-protected glove box (with a moisture content < 1 ppm and an oxygen content < 1 ppm), to 675 g of ethyl methyl carbonate (EMC), 100 g of fluoroethylene carbonate (FEC) was added, and then 187 g of lithium bis(fluorosulfonyl)imide (LiFSi), 5 g of vinylene carbonate (VC), 10 g of 1,3-propanesultone (PS), 3 g of lithium difluorophosphate (LiPO₂F₂), and 20 g of ethylene sulfate (DTD) were added and stirred until uniform to obtain the electrolyte of the lithium-ion battery in Example 10. Specifically, the contents by mass of the components, based on the total weight of the electrolyte, were shown in Table 1.

### Example 11

Example 11 was different from Example 1 only in the composition of the electrolyte, which was prepared as follows:
In a nitrogen-protected glove box (with a moisture content < 1 ppm and an oxygen content < 1 ppm), to 675 g of ethyl methyl carbonate (EMC), 100 g of fluoroethylene carbonate (FEC) was added, and then 32 g of lithium hexafluorophosphate (LiPF₆), 153 g of lithium bis(fluorosulfonyl)imide (LiFSi), 5 g of vinylene carbonate (VC), 10 g of 1,3-propanesultone (PS), and 5 g of lithium difluorophosphate (LiPO₂F₂) were added and stirred until uniform to obtain the electrolyte of the lithium-ion battery in Example 11. The ratio of the molar concentration of LiPF₆ to LiFSi in the electrolyte was 1 : 3.9. Specifically, the contents by mass of the components, based on the total weight of the electrolyte, were shown in Table 1.

### Example 12

Example 12 was different from Example 1 only in the composition of the electrolyte, which was prepared as follows:
In a nitrogen-protected glove box (with a moisture content < 1 ppm and an oxygen content < 1 ppm), to 147 g of ethylene carbonate (EC), 470 g of ethyl methyl carbonate (EMC), and 73 g of propylene carbonate (PC), 150 g of lithium hexafluorophosphate (LiPF₆) was added, and then 100 g of fluoroethylene carbonate (FEC), 5 g of vinylene carbonate (VC), 10 g of 1,3-propanesultone (PS), 20 g of lithium bis(fluorosulfonyl)imide (LiFSi), 5 g of lithium difluorophosphate (LiPO₂F₂), and 20 g of ethylene sulfate (DTD) were added and stirred until uniform to obtain the electrolyte of the lithium-ion battery of Example 12. The ratio of the molar concentration of LiPF₆ to LiFSi in the electrolyte was 10 : 1. Specifically, the contents by mass of the components, based on the total weight of the electrolyte, were shown in Table 1.

### Example 13

Example 13 was different from Example 1 only in the composition of the electrolyte, which was prepared as follows:
In a nitrogen-protected glove box (with a moisture content < 1 ppm and an oxygen content < 1 ppm), to 147 g of ethylene carbonate (EC), 570 g of ethyl methyl carbonate (EMC), and 73 g of propylene carbonate (PC), 150 g of lithium hexafluorophosphate (LiPF₆) was added, and then 5 g of vinylene carbonate (VC), 10 g of 1,3-propanesultone (PS), 20 g of lithium bis(fluorosulfonyl)imide (LiFSi), 5 g of lithium difluorophosphate (LiPO₂F₂), and 20 g of ethylene sulfate (DTD) were added and stirred until uniform to obtain the electrolyte of the lithium-ion battery of Example 13. The ratio of the molar concentration of LiPF₆ to LiFSi in the electrolyte was 10 : 1. Specifically, the contents by mass of the components, based on the total weight of the electrolyte, were shown in Table 1.

### Example 14

Example 14 was different from Example 1 only in the composition of the electrolyte, which was prepared as follows:
In a nitrogen-protected glove box (with a moisture content < 1 ppm and an oxygen content < 1 ppm), to 250 g of ethylene carbonate (EC) and 495 g of ethyl methyl carbonate (EMC), 150 g of lithium bis(fluorosulfonyl)imide (LiFSi) was added, and then 100 g of fluoroethylene carbonate (FEC) and 5 g of vinylene carbonate (VC) were added and stirred until uniform to obtain the electrolyte of the lithium-ion battery in Example 14. Specifically, the contents by mass of the components, based on the total weight of the electrolyte, were shown in Table 1.

### Test method

### 1. Test of direct current internal resistance

The capacity grading was performed with a current of 0.33C, and the discharge capacity was recorded as C0. After capacity grading, a fully charged battery was placed in a thermal chamber at 25°C for discharging at 0.33C, and the discharging was stopped once half of the rated capacity, i.e., C0/2, was reached. The battery was left to stand for 1 h, and the voltage V1 at this time was recorded. Then the battery was discharged at a current of 2C for 10 s, and the cut-off discharge voltage V2 was recorded. Direct current internal resistance DCIR = (V1-V2)/2C. The results were shown in Table 1 below.

### 2. Test of cycle life at room temperature

A fully charged battery after capacity grading was placed in a thermal chamber at 25°C for discharging at 1C until 3.0 V, and the initial discharge capacity was recorded as DC(1). The battery was then charged to 4.2 V at a constant current of 1 C and a constant voltage, with a cut-off current of 0.05C; and the battery was left to stand for 5 min and then discharged to 3.0 V at 1C, and the discharge capacity DC(2) was recorded. The process was repeated until DC(N) < 80%, and the number of discharges was recorded as N, which was the cycle life at room temperature. The results were shown in Table 1 below.

### 3. Test in thermal chamber

### Calibrated & fully charged, on a fixture

1-1) at 25±2°C, leave to stand for 5 min;
1-2) at 25±2°C, charge to 4.25 V at 1/3C-rated using a CC-CV method, with a cut-off current of 1/20C-rated;
1-3) at 25±2°C, leave to stand for 30 min;
1-4) at 25±2°C, discharge to 2.5 V at 1/3C-rated;
1-5) at 25±2°C, leave to stand for 30 min;
1-6) repeat steps 1-2) to 1-5); (the calibrated discharge capacity of the second cycle being taken as C-actual);
1-7) at 25±2°C, charge to 4.25 V at 1/3C-rated using a CC-CV method, with a cut-off current of 1/20C-rated;
1-8) end.

Before the test, the information of the cells was collected, including open-circuit voltage, ACR, weight, and status photos

### Test - thermal chamber: a cell was fixed on a fixture with 6 bolts, with a pre-tightening force of 1.5 Nm

2-1) The battery was placed in a temperature chamber, which was heated, at a rate of 5°C/min, from ambient temperature to 130±2°C and was held at the temperature for 60 min;
2-2) the temperature chamber was continued to be heated by 10°C at a rate of 5°C/min, and was held at the temperature for 60 min; and
2-3) the steps 2-1) and 2-2) were repeated until thermal runaway occurred.

### Test results

**Table 1**

| Examples and comparative examples | Electrolyte | | | | | | | | | | | | | | Lithium-ion battery | | |
|---|---|---|---|---|---|---|---|---|---|---|---|---|---|---|---|---|---|
| | Solvent | | | | | | Lithium salt | | | | Additive Type/content % by mass | | | | Direct current internal resistance (DCIR) mΩ | Cycle life N at room tempe -rature | Passable thermal chamber temperatu -re °C |
| | Chain carbonate | | Fluorinated cyclic carbonate | | Unsubstituted saturated cyclic carbonate | | First lithium salt | | Second lithium salt | | VC | PS | LiPO₂F₂ | DTD | | | |
| | Type | Content by mass % | Type | Content by mass % | Type | Content by mass % | Type | Content by mass % | Type | Content by mass % | Content by mass % | Content by mass % | Content by mass % | Content by mass % | | | |
| Example 1 | EMC | 83.2 | None | | None | | LiPF₆ | 12.8 | None | | 0.5 | 1.0 | 0.5 | 2.0 | 2.31 | 211 | 180 |
| Example 2 | EMC | 83.2 | None | | None | | LiPF₆ | 5.8 | LiFSi | 7.0 | 0.5 | 1.0 | 0.5 | 2.0 | 2.26 | 230 | 190 |
| Example 3 | EMC | 73.2 | FEC | 10 | None | | LiPF₆ | 5.8 | LiFSi | 7.0 | 0.5 | 1.0 | 0.5 | 2.0 | 1.64 | 537 | 200 |
| Example 4 | EMC | 78.2 | FEC | 5 | None | | LiPF₆ | 5.8 | LiFSi | 7.0 | 0.5 | 1.0 | 0.5 | 2.0 | 1.69 | 283 | 200 |
| Example 5 | EMC | 63.2 | FEC | 20 | None | | LiPF₆ | 5.8 | LiFSi | 7.0 | 0.5 | 1.0 | 0.5 | 2.0 | 1.89 | 587 | 190 |
| Example 6 | EMC | 53.2 | FEC | 30 | None | | LiPF₆ | 5.8 | LiFSi | 7.0 | 0.5 | 1.0 | 0.5 | 2.0 | 2.36 | 345 | 180 |
| Example 7 | EMC | 41.6 | FEC | 41.6 | None | | LiPF₆ | 5.8 | LiFSi | 7.0 | 0.5 | 1.0 | 0.5 | 2.0 | 4.31 | 100 | 190 |
| Example 8 | EMC | 73.2 | FEC | 10 | None | | None | | LiFSi | 12.8 | 0.5 | 1.0 | 0.5 | 2.0 | 1.58 | 352 | 220 |
| Example 9 | EMC | 73.2 | FEC | 10 | None | | LiPF₆ | 12.8 | None | | 0.5 | 1.0 | 0.5 | 2.0 | 1.68 | 521 | 180 |
| Example 10 | EMC | 67.5 | FEC | 10 | None | | None | | LiFSi | 18.7 | 0.5 | 1.0 | 0.3 | 2.0 | 2.72 | 374 | 220 |
| Example 11 | EMC | 68.9 | FEC | 10.2 | None | | LiPF₆ | 3.3 | LiFSi | 15.6 | 0.5 | 1.0 | 0.5 | 0 | 1.70 | 562 | 200 |
| Example 12 | EMC | 47.0 | FEC | 10 | EC + PC | 14.7 + 7.3 | LiPF₆ | 15 | LiFSi | 2 | 0.5 | 1.0 | 0.5 | 2.0 | 1.55 | 577 | 140 |
| Example 13 | EMC | 57.0 | None | | EC + PC | 14.7 + 7.3 | LiPF₆ | 15 | LiFSi | 2 | 0.5 | 1.0 | 0.5 | 2.0 | 1.61 | 324 | 130 |
| Example 14 | EMC | 49.5 | FEC | 10 | EC | 25 | None | | LiFSi | 15 | 0.5 | 0 | 0 | 0 | 1.37 | 465 | 150 |

Although some exemplary embodiments of the disclosure have been illustrated and described, the disclosure is not limited to the disclosed embodiments. On the contrary, those of ordinary skill in the art will recognize that some modifications and changes may be made to the described embodiments without departing from the spirit and scope of the disclosure as described in the appended claims.

## Claims

1. **A secondary** battery, comprising a cathode, an anode, and an electrolyte, wherein the cathode comprises a cathode active material, and the cathode active material comprises at least one of LiNiₓCo_{y}M_{(1-x-y)}O₂ materials, where M is selected from at least one of Mn, Al, Mg, Cr, Ca, Zr, Mo, Ag and Nb, 0.8 ≤ x ≤1, 0 ≤ y ≤ 0.2, and x + y ≤ 1;
the anode comprises an anode active material, and the anode active material comprises a silicon-based material and a carbon-based material; and
the electrolyte comprises a non-aqueous organic solvent, a lithium salt, and an additive, and the non-aqueous organic solvent comprises at least one of a chain carbonate and a fluorinated cyclic carbonate.

2. The secondary battery according to claim 1, wherein the electrolyte comprises no ethylene carbonate and/or propylene carbonate, and preferably the electrolyte comprises no unsubstituted saturated cyclic carbonate.

3. The secondary battery according to claim 1 or 2, wherein the content by mass of the chain carbonate is 0 to 90%, preferably 30% to 80%, based on the mass of the electrolyte; and/or
the content by mass of the fluorinated cyclic carbonate is 0 to 30%, preferably 10% to 30%, based on the mass of the electrolyte; and/or
the total content by mass of the chain carbonate and the fluorinated cyclic carbonate is 80% or more, preferably 90% or more, based on the mass of the electrolyte.

4. The secondary battery according to any one of claims 1-3, wherein the chain carbonate comprises at least one of compounds represented by formula I, 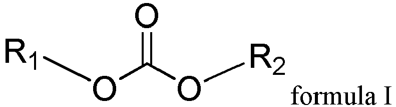
where in formula I, R₁ and R₂, equal or different, are each independently selected from C₁-C₆ alkyl or fluorinated C₁-C₆ alkyl, and preferably the chain carbonate comprises at least one of dimethyl carbonate, ethyl methyl carbonate, diethyl carbonate, methyl n-propyl carbonate, ethyl n-propyl carbonate, di-n-propyl carbonate, bis(fluoromethyl) carbonate, bis(difluoromethyl) carbonate, bis(trifluoromethyl) carbonate, bis(2-fluoroethyl) carbonate, and bis(2,2-difluoroethyl) carbonate; and/or
the fluorinated cyclic carbonate comprises at least one of compounds represented by formula II, 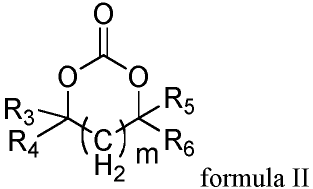
where in formula II, R₃, R₄, R₅ and R₆ are each independently selected from a hydrogen atom, a fluorine atom, and C₁-C₆ alkyl, and at least one of R₃, R₄, R₅ and R₆ is a fluorine atom, and m is 0, 1, 2, 3 or 4; and preferably, the fluorinated cyclic carbonate comprises at least one of fluoroethylene carbonate, fluoropropylene carbonate, difluoroethylene carbonate, difluoropropylene carbonate, trifluoropropylene carbonate, trifluoromethyl propylene carbonate, and fluorobutylene carbonate.

5. The secondary battery according to any one of claims 1-4, wherein the lithium salt comprises a first lithium salt and a second lithium salt; the first lithium salt comprises one or more sulfonyl-free lithium salts, preferably selected from at least one of lithium hexafluorophosphate, lithium tetrafluoroborate, lithium perchlorate, lithium hexafluoroarsenate, lithium hexafluoroantimonate, and lithium fluorosulfonate; and
the second lithium salt comprises one or more sulfonyl-containing lithium salts, preferably selected from at least one of lithium trifluorosulfonyl, lithium bis(fluorosulfonyl)imide, lithium (trifluoromethanesulfonyl)(perfluorobutanesulfonyl)imide, lithium bis(trifluoromethanesulfonyl)imide, and lithium bis(pentafluoroethanesulfonyl)imide.

6. The secondary battery according to claim 5, wherein the concentration of the lithium salt in the electrolyte is 0.5 M-2.5 M, preferably 0.7 M-1.8 M; and/or
the concentration of the first lithium salt is 0 M-1 M, preferably 0.1 M-0.5 M; and/or
the concentration of the second lithium salt is 0.2 M-1.2 M, preferably 0.7 M-1 M; and/or
the concentration ratio of the first lithium salt to the second lithium salt is 1:1 to 1:10, preferably 1:1 to 1:8, more preferably 1:2 to 1:6.

7. The secondary battery according to any one of claims 1-6, wherein the non-aqueous solvent further comprises at least one of a carboxylate, a chain ether, a phosphorus-containing organic solvent, a sulfur-containing organic solvent, and an aromatic fluorine-containing solvent.

8. The secondary battery according to any one of claims 1-7, wherein the additive comprises at least one of a carbon-carbon double bond-containing cyclic carbonate, a cyclic sulfate compound, a sultone compound, a cyclic anhydride, a boron-containing lithium salt, and a lithium phosphate salt; and/or
the content by mass of the additive is 0 to 8%, based on the mass of the electrolyte.

9. The secondary battery according to any one of claims 1-7, wherein in the LiNiₓCo_{y}M_{(1-x-y)}O₂ materials, 0.86 ≤ x ≤ 1, 0 ≤ y ≤0.14, and x + y ≤ 1; and/or
the silicon-based material is a silicon oxide and/or a silicon-carbon composite, and the carbon-based material is graphite; and/or
in the anode active material, the content z% by mass of the silicon-based material satisfies 10 ≤ z < 100, preferably 15 ≤ z ≤ 50, and the content k% by mass of the carbon-based material satisfies 0 < k ≤ 90, preferably 50 ≤ k ≤ 85.

10. An apparatus, comprising the secondary battery according to any one of claims 1-9.
